# EUROPEAN PATENT SPECIFICATION

(11) **EP 3 546 121 B1**
(45) Date of publication and mention of the grant of the patent: **18.10.2023**
(21) Application number: 19159006.6
(22) Date of filing: 25.02.2019
(51) Int. Cl.: B24B 9/14, G01B 5/20, B24B 49/02, B24B 49/12, G02C 1/04, G02C 13/00

(54) **INFORMATION ACQUIRING APPARATUS, INFORMATION ACQUIRING METHOD AND INFORMATION ACQUIRING PROGRAM**
INFORMATIONSERFASSUNGSVORRICHTUNG, INFORMATIONSERFASSUNGSVERFAHREN UND INFORMATIONSERFASSUNGSPROGRAMM
APPAREIL, PROCÉDÉ ET PROGRAMME D'ACQUISITION D'INFORMATIONS

(30) Priority: 30.03.2018 JP 2018069769
(43) Date of publication of application: 02.10.2019
(73) Proprietor: Nidek Co., Ltd., Gamagori-shi, Aichi, 443-0038 (JP)
(72) Inventor: MATSUI, Takaaki, Gamagori, Aichi (JP)
(74) Representative: Hoefer & Partner Patentanwälte mbB

(56) References cited:
- EP-A2- 2 489 466
- US-A1- 2009 201 463
- US-A1- 2017 208 229

## Description

### TECHNICAL FIELD

The present disclosure relates to an information acquiring apparatus, an information acquiring method and an information acquiring program that acquire information for processing a peripheral edge of an eyeglasses lens.

### BACKGROUND

An eyeglasses frame shape measuring apparatus is known which is capable of measuring the shape of a demonstration lens or a template by bringing a measurement stylus shaft to which a measurement stylus is attached into contact with the demonstration lens or the template (see, for example, JP-A-2011-122898).

In recent years, eyeglasses frames of various materials and shapes have been released. Among these, there is an eyeglasses frame in which a projection part is formed on the rim thereof so as to fit an eyeglasses lens into the eyeglasses frame. One example of the eyeglasses frame is a sheet metal frame. The depth of a groove, which is formed in the eyeglasses lens and into which the projection part of the rim is fitted, is manually set depending on the shape of the demonstration lens or the template.

In the related art, it is difficult to set the depth of the groove formed on the eyeglasses lens with accuracy. When a eyeglasses lens in which the groove improperly formed with respect to the rim of the eyeglasses frame, if the eyeglasses lens is fitted into the rim as described above, there is a problem that the eyeglasses lens is unstable, which may result in rattling or distorting of the eyeglasses lens.
From US 2009/201463 A1, which forms the basis for the preamble of claim 1, insertable cut blade-style eyeglass lenses are known, in which a non-uniform thickness lens has a portion of a peripheral edge trimmer for secure engagement within a groove of a blade style frame. Frame parameters are determined, such as by tracing the frame. The frame parameters include the plan layout as well as the contour and width of the engagement groove in the frame. The lens is edged to match the plan shape of the frame.

### SUMMARY

An object of the present invention is to provide an information acquiring apparatus, an information acquiring method and an information acquiring program as defined in the independent claims respectively, which can accurately acquire a depth of a groove of an eyeglasses lens to form an appropriate groove.

In order to solve the problem, in the present disclosure there are provided features including following configurations.
(1) An information acquiring apparatus that acquires information for processing a peripheral edge of an eyeglasses lens, including:
   a first shape information acquiring portion configured to acquire first shape information regarding a shape of a projection part of an eyeglasses frame having a rim, the projection part being formed on the rim to be fitted into the eyeglasses lens;
   a second shape information acquiring portion configured to acquire second shape information regarding a shape of a peripheral edge of a demonstration lens or a template of the eyeglasses frame; and
   a groove information acquiring portion configured to acquire groove information regarding a groove formed in the eyeglasses lens for fitting the eyeglasses lens into the eyeglasses frame, based on the first shape information and the second shape information.
(2) The information acquiring apparatus according to the above-described (1),
   in which the first shape information acquiring portion acquires the first shape information regarding the projection part at a plurality of vector angles of the eyeglasses frame,
   the second shape information acquiring portion acquires the second shape information at a plurality of vector angles of the demonstration lens or the template of the eyeglasses frame corresponding to the plurality of vector angles of the eyeglasses frame, and
   the groove information acquiring portion acquires the groove information at the plurality of vector angles based on the first shape information and the second shape information.
(3) The information acquiring apparatus according to the above-described (1) or (2),
   in which the groove information acquiring portion acquires an internal shape of the rim formed by the projection part from the first shape information, acquires an external shape of the demonstration lens or the template from the second shape information, and acquires the groove information based on the internal shape and the external shape.
(4) The information acquiring apparatus according to the above-described (3),
   in which the groove information acquiring portion executes a difference processing between the internal shape and the external shape to acquire the groove information.
(5) The information acquiring apparatus according to any one of the above-described (1) to (4),
   in which the groove information acquiring portion causes a display portion to display the groove information, and sets the groove information based on an operation signal from an operation portion input by an operator for adjusting the groove information on the display portion.
(6) The information acquiring apparatus according to any one of the above-described (1) to (5), further including:
   a processing control data acquiring portion configured to acquire processing control data for forming the groove on the eyeglasses lens based on the groove information, the groove being formed for fitting the eyeglasses lens into the eyeglasses frame.
(7) The information acquiring apparatus according to any one of the above-described (1) to (6),
   in which the groove information is depth information of the groove.
(8) An information acquiring method of an information acquiring apparatus that acquires information for processing a peripheral edge of an eyeglasses lens
   in which the information acquiring method, executed by a processor of the information acquiring apparatus, includes:
   a step of acquiring first shape information regarding a shape of a projection part of an eyeglasses frame having a rim, the projection part being formed on the rim to be fitted into the eyeglasses lens;
   a step of acquiring second shape information regarding a shape of a peripheral edge of a demonstration lens or a template of the eyeglasses frame; and
   a step of acquiring groove information regarding a groove formed in the eyeglasses lens for fitting the eyeglasses lens into the eyeglasses frame, based on the first shape information and the second shape information.
(9) An information acquiring program used in the information acquiring apparatus according to any one of the above-described (1) to (7),
   in which the information acquiring program is executed by a processor of the information acquiring apparatus to cause the information acquiring apparatus to execute:
   a step of acquiring first shape information regarding a shape of a projection part of an eyeglasses frame having a rim, the projection part being formed on the rim to be fitted into the eyeglasses lens;
   a step of acquiring second shape information regarding a shape of a peripheral edge of a demonstration lens or a template of the eyeglasses frame; and
   a step of acquiring groove information regarding a groove formed in the eyeglasses lens for fitting the eyeglasses lens into the eyeglasses frame, based on the first shape information and the second shape information.

### BRIEF DESCRIPTION OF DRAWINGS

Fig. 1 is a schematic external view of an information acquiring apparatus.
Fig. 2 is a top view of a frame holding unit.
Fig. 3 is a perspective view of the frame holding unit.
Fig. 4 is a schematic configuration view of a clamp mechanism.
Figs. 5A and 5B are views illustrating a measuring unit 200.
Fig. 6 is a view showing a control system of the information acquiring apparatus.
Fig. 7 is a flowchart showing control operations.
Figs. 8A and 8B are views showing a positional relationship

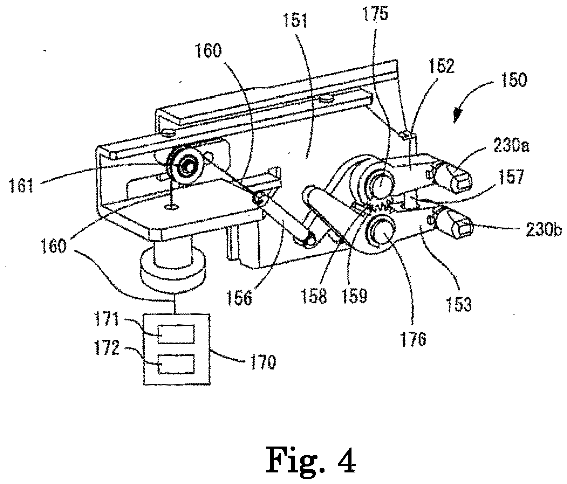

Fig. 4 is a schematic configuration view of a clamp mechanism.

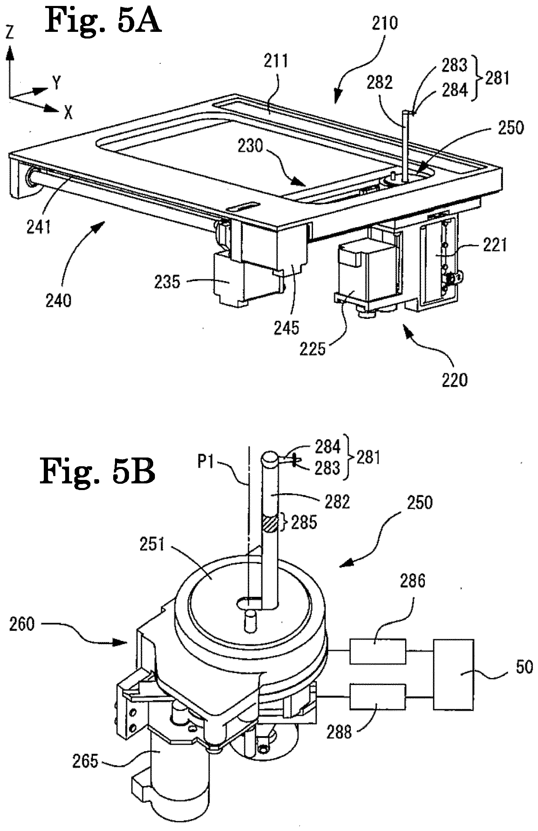

Figs. 5A and 5B are views illustrating a measuring unit 200.

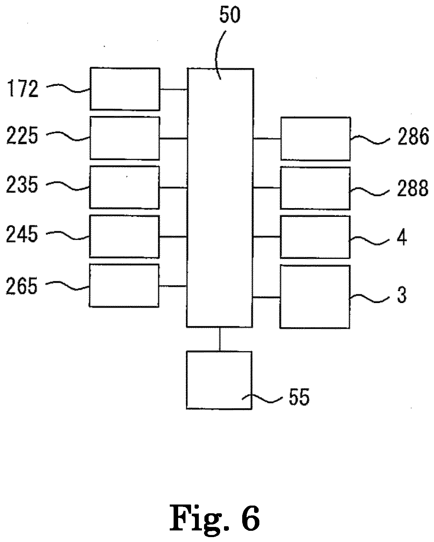

Fig. 6 is a view showing a control system of the information acquiring apparatus.

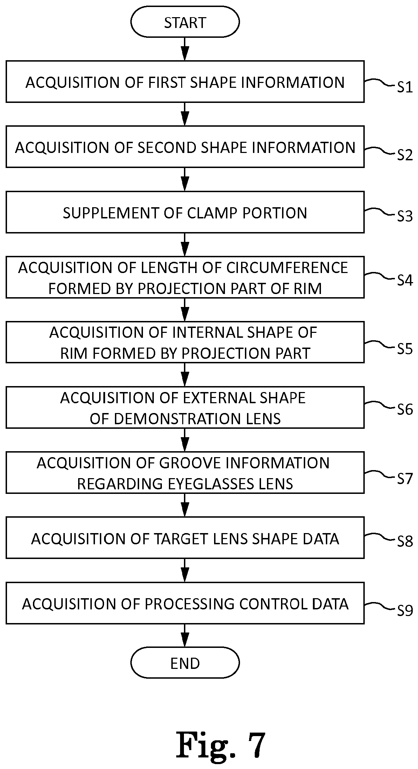

Fig. 7 is a flowchart showing control operations.

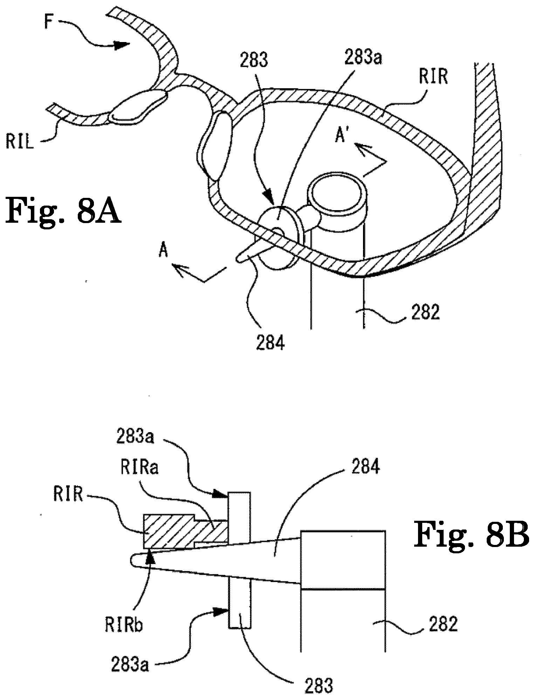

Figs. 8A and 8B are views showing a positional relationship between a frame and a measurement stylus.

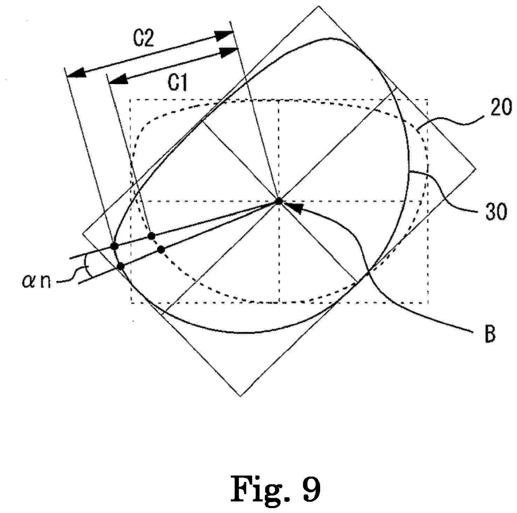

Fig. 9 is a view showing an example of a state in which boxing centers are superimposed on each other.

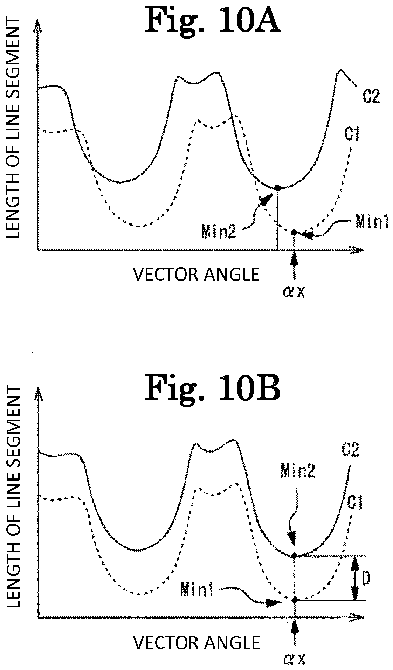

Figs. 10A and 10B are views showing a change in a length of a segment for each vector angle.

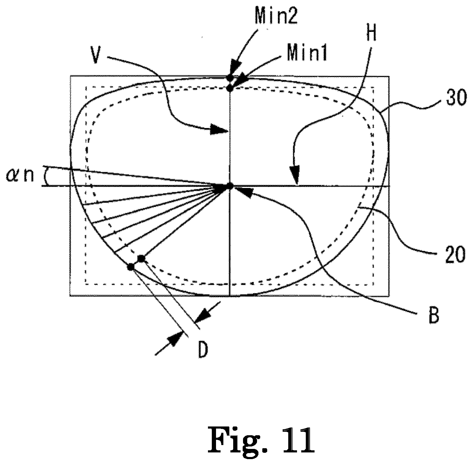

Fig. 11 is a view illustrating a depth of a groove.

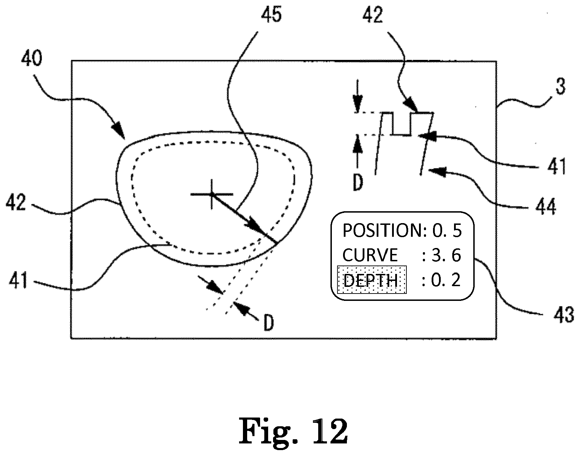

Fig. 12 is a view showing an example of target lens shape data.

### DETAILED DESCRIPTION

### <Overview>

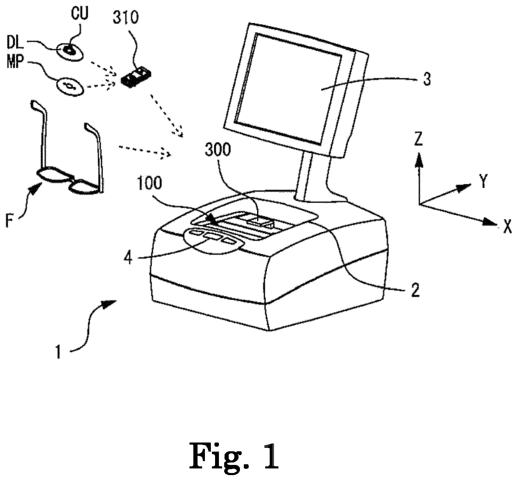

A typical embodiment will be described with respect to drawings. Figs. 1 to 12 are figures illustrating an information acquiring apparatus according to the present embodiment. An item classified by < > as denoted below can be used independently or in association with another item.

### <Projection part of Eyeglasses Frame and Groove of Eyeglasses Lens>

An eyeglasses frame described in the present example has a projection part formed on the rim thereof. The projection part of the eyeglasses frame may be formed of at least one of a sheet metal, a plastic, a resin, or the like. Furthermore, the projection part of the eyeglasses frame may be formed using a rim line. For example, the cross-sectional shape of the projection part of the rim of the eyeglasses frame may be a quadrangular shape, a half-moon shape, a bevel shape, or the like. That is, the projection part of the rim in the eyeglasses frame may have a shape in which the projection part can be fitted into the groove formed in an eyeglasses lens. The eyeglasses lens described in the present example has a groove on the peripheral edge (in order words, the edge surface) thereof. For example, the cross-sectional shape of the groove of the eyeglasses lens may be a quadrangular shape, a half-moon shape, a bevel shape, or the like. That is, the groove provided with the eyeglasses lens may have a shape in which the projection part of the rim of the eyeglasses frame can be fitted into the groove.

The shape of the projection part of the rim of the eyeglasses frame and the shape of the groove of the eyeglasses lens may have shapes that match each other. That is, a gap may not be formed when the projection part of the rim is fitted into the groove. Of course, the shape of the projection part of the rim of the eyeglasses frame and the shape of the groove of the eyeglasses lens may not be perfectly matched with each other and thus a gap may be formed when the projection part of the rim is fitted into the groove.

### <First Shape Information Acquiring Portion and Second Shape Information Acquiring Portion>

For example, the information acquiring apparatus includes a first shape information acquiring portion (for example, a control portion 50). The first shape information acquiring portion acquires first shape information regarding a shape of the projection part of the eyeglasses frame having the rim on which the projection part to be fitted into the eyeglasses lens is formed. That is, the first shape information acquiring portion acquires the first shape information regarding the shape of the projection part of the rim into which the eyeglasses lens is fitted. For example, the first shape information may be three-dimensional shape data of the projection part of the rim. Furthermore, for example, the first shape information may be two-dimensional shape data of the projection part of the rim. For example, the shape information regarding the projection part of the rim may be data such as a length of a circumference formed by the projection part of the rim, an internal shape of the rim formed by the projection part, the thickness of the projection part of the rim (that is, the width of the groove formed in the eyeglasses lens). For example, the first shape information acquiring portion may acquire the first shape information regarding the projection part of the rim at a plurality of vector angles of the eyeglasses frame. Of course, the first shape information acquiring portion may acquire the first shape information regarding the projection part at one vector angle of the eyeglasses frame.

For example, a target lens shape acquiring apparatus includes a second shape information acquiring portion (for example, the control portion 50). The second shape information acquiring portion acquires second shape information regarding a shape of a peripheral edge of the demonstration lens or the template of the eyeglasses frame. For example, the second shape information may be two-dimensional shape data of the demonstration lens or the template. Furthermore, for example, the second shape information may be three-dimensional shape data of the demonstration lens or the template. For example, the shape information regarding the demonstration lens or the template may be data such as a circumferential length of the demonstration lens or the template, an external shape of the demonstration lens or the template. For example, the second shape information acquiring portion may acquire the second shape information at a plurality of vector angles of the demonstration lens or the template of the eyeglasses frame. Of course, the second shape information acquiring portion may acquire the first shape information of the projection part at one vector angle of the demonstration lens or the template.

In the present example, the first shape information acquiring portion may acquire the first shape information from accumulated data. Furthermore, in the present example, the second shape information acquiring portion may acquire the second shape information from accumulated data. That is, in the present example, at least one of the first shape information and the second shape information may be acquired from the accumulated data. For example, in this case, the first shape information and the second shape information measured in advance are accumulated, and the first shape information acquiring portion or the second shape information acquiring portion calls corresponding data and sets it, such that the first shape information and the second shape information can be acquired.

In the present example, the first shape information acquiring portion may measure the first shape information using a first measuring portion (for example, a measuring unit 200). Furthermore, in the present example, the second shape information acquiring portion may measure the second shape information using a second measuring portion (for example, the measuring unit 200). It should be noted that the first measuring portion and the second measuring portion may be used in common, or they may be separately provided.

In the case where the information acquiring apparatus includes at least one of the first measuring portion and the second measuring portion, the measuring portion may be a measuring portion for measuring the first shape information and the second shape information with a contact type configuration. Further, the measuring portion may be a measuring portion for measuring the first shape information and the second shape information with a non-contact type configuration. Further, the measuring portion may be a measuring portion for measuring one of the first shape information and the second shape information with a contact type configuration and the other with a non-contact type configuration.

For example, the measuring portion for performing a measurement with the contact type configuration may have a configuration of bring a measurement stylus (for example, a measurement stylus 281) into contact with the projection part of the rim, a configuration of bring a measurement stylus shaft (for example, a measurement stylus shaft 282) into contact with the peripheral edge of the demonstration lens or the template, or the like. For example, it is possible to measure the first shape information and the second shape information by detecting the movement of the measurement stylus and the measurement stylus shaft.

In the present example, the measurement stylus is provided with a first contact portion (for example, a first contact portion 283) in contact with the projection part of the rim and a second contact portion (for example, a second contact portion 284) in contact with the front surface of the rim. In this case, with respect to the eyeglasses frame having the rim on which the projection part to be fitted into the eyeglasses lens is formed (that is, the eyeglasses frame having no groove on the rim), the first contact portion and the second contact portion may be brought into contact with the projection part and the front surface. As an example, for the sheet metal frame, the first contact portion and the second contact portion may be brought into contact with the protruding portion and the front surface. The second contact portion does not necessarily have to be in contact with the front surface of the rim, and may be, for example, in contact with the rear surface of the rim.

Further, in this case, with respect to the eyeglasses frame having the rim formed with the groove into which the eyeglasses lens is fitted (that is, the eyeglasses frame having the groove on the rim), the tip of the second contact portion may be brought into contact with the groove. As an example, in a celluloid frame, the tip of the second contact portion may be brought into contact with the groove. For example, the first contact portion may be removable depending on which eyeglasses frame is to be measured. This makes it possible to perform the measurement of both the eyeglasses frame having no groove on the rim and the eyeglasses frame having the groove on the rim.

The shape of the measurement stylus is not limited to any particular shape. For example, a configuration may be employed in which a dent is provided at the tip of the measurement stylus and the dent is brought into contact with the projection part of the rim and the front surface (or the rear surface) of the rim. That is, the measurement stylus may have any shape as long as it can contact the projection part of the rim and the front surface (or the rear surface) of the rim to acquire the first shape information.

For example, the measuring portion for performing a measurement with the non-contact type configuration may include a light projecting optical system for emitting the measurement light beam and a light receiving optical system for receiving the reflected light beam which is the reflected measurement light beam. The light projecting optical system may emit the measurement light beam on at least one of the projection part of the rim, the peripheral edge of the demonstration lens, the peripheral edge of the template, and the like. Further, the light receiving optical system may receive the reflected light beam reflected by at least one of the projection part of the rim, the peripheral edge of the demonstration lens, the peripheral edge of the template, and the like. For example, by analyzing such reflected light beam, it is possible to measure the first shape information and the second shape information.

### <Groove Information Acquiring Portion>

For example, the information acquiring apparatus includes the groove information acquiring portion (for example, the control portion 50). Based on the first shape information and the second shape information, the groove information acquiring portion acquires groove information of the groove formed in the eyeglasses lens for fitting the eyeglasses lens in the eyeglasses frame. For example, the groove information may be groove depth information. The depth information of the groove is depth information of the groove which is formed from the peripheral edge of the eyeglasses lens toward the center of the eyeglasses lens and into which the projection part of the rim of the eyeglasses frame is fitted. In other words, the depth information of the groove is the height information of the projection part of the rim of the eyeglasses frame which is fitted into the groove of the eyeglasses lens. Further, for example, the groove information may be position information of the groove. Further, for example, the groove information may be information regarding the width of the groove. That is, the groove information acquiring portion may acquire at least one of the depth of the groove, the position of the groove, the width of the groove, and the like. For example, with such a configuration of the information acquiring apparatus, an operator can form an appropriate groove on the eyeglasses lens using the groove information. In addition, the operator can suppress variations in processing of the eyeglasses lens using the groove information.

The groove information acquiring portion may acquire the groove information at a plurality of vector angles based on the first shape information and the second shape information. In this way, it is possible to obtain detailed information on the groove formed in the eyeglasses lens, which makes it possible to form the groove on the eyeglasses lens with more accuracy.

Further, the groove information acquiring portion may acquire the internal shape of the rim formed by the projection part from the first shape information, acquire the external shape of the demonstration lens or the template from the second shape information, and acquire the groove information based on the internal shape and the external shape. For example, in this case, the groove information acquiring portion executes a difference process between the internal shape and the external shape to acquire the groove information. It is difficult to acquire groove information only from the demonstration lens (or template). However, with such a configuration, the groove information of the groove formed in the eyeglasses lens can be easily acquired.

For example, in the present example, the groove information acquiring portion may create lens shape data (for example, target lens shape data 40) by directly using the acquired groove information. Further, for example, in the present example, the groove information acquiring portion may adjust the acquired groove information to create the target lens shape data. In this case, the groove information acquiring portion may have a configuration of causing a display portion (for example, a monitor 3) to display the groove information and setting groove information based on an operation signal from an operation portion (for example, a switch section 4) for adjusting the groove information on the display portion. For example, by adjusting the groove information in this manner, the operator can correct the groove formed in the eyeglasses lens to a more optimal state.

### <Processing Control Data Acquiring Portion>

For example, the information acquiring apparatus includes a processing control data acquiring portion (for example, the control portion 50). Based on the groove information, the processing control data acquiring portion acquires processing control data for forming a groove for fitting the eyeglasses lens into the eyeglasses frame on the eyeglasses lens. The processing control data acquiring portion may acquire the processing control data through calculation by the control portion of the information acquiring apparatus. Further, the processing control data acquiring portion may acquire the processing control data by receiving the processing control data calculated by the control portion of other apparatus.

For example, in the present example, the processing control data acquiring portion may acquire a circumferential length of a groove of the rim from the first shape information, acquire the external shape of the demonstration lens or the template from the second shape information, and acquire the processing control data based on the circumferential length of the groove of the rim and the external shape of the demonstration lens or the template. For example, by using the above-mentioned processing control data, the operator can reduce instability and distortion when putting the eyeglasses lens in the sheet metal frame, and can process a eyeglasses lens nicely.

In addition, for example, the processing control data acquiring portion may directly acquire the processing control data based on the first shape information and the second shape information. Further, for example, the processing control data acquiring portion may acquire the target lens shape data based on the first shape information and the second shape information, and acquire the processing control data for the target lens shape data.

Further, for example, in addition to the first shape information and the second shape information, the processing control data acquiring portion may acquire the processing control data based on layout data of the eyeglasses lens. That is, the processing control data acquiring portion may acquire the processing control data based on the first shape information, the second shape information, and the layout data. Of course, in addition to the above-mentioned data or information, at least one of a processing condition of the eyeglasses lens, lens shape data of the eyeglasses lens, frame shape data of the frame and the like may be used.

It should be noted that the present disclosure is not limited to the apparatus described in the present embodiment. For example, terminal control software (program) for performing the functions of the embodiment described below can supplied to a system or an apparatus through a network or various storage media, and a control device (for example, a CPU) of the system or the apparatus can read the program and execute the program.

### <Example>

Fig. 1 is a schematic external view of the information acquiring apparatus. In the present example, the lateral direction (horizontal direction) of the information acquiring apparatus is defined as an X direction, the up-down direction (vertical direction) as a Y direction, and the longitudinal direction as a Z direction. For example, the information acquiring apparatus 1 includes an opening window 2, the monitor (display) 3, the switch section 4, a frame holding unit 100, the measuring unit 200, an attaching portion 300, and the like.

For example, the monitor 3 is a touch panel. That is, the monitor 3 functions as an operation portion (controller). In the present example, it is possible to input the frame shape data of the frame F, the layout data of the eyeglasses lens, the processing condition of the eyeglasses lens, and the like, through the monitor 3. A signal corresponding to the operation instruction input from the monitor 3 is output to the control portion 50 described later. The monitor 3 does not need to be of a touch panel type, and may have a configuration in which the monitor 3 and the operation portion are separately provided. In this case, at least one of a mouse, a joystick, a keyboard, a portable terminal, and the like can be used as the operation portion.

For example, the monitor 3 may be a monitor mounted on the information acquiring apparatus 1. For example, the monitor 3 may be a monitor connected to the information acquiring apparatus 1. In this case, a monitor of a personal computer may be used. The monitor 3 may be configured as a plurality of monitors that can be used simultaneously.

The switch section 4 is used to input a signal for causing the information acquiring apparatus 1 to execute various kinds of processes. Examples of the various kinds of processes include switching between measurement modes, and starting of the measurement. In the present example, the switch section 4 is provided on a main body cover of the information acquiring apparatus 1. Of course, the switch section 4 may be electronically displayed on the screen of the monitor 3. In this case, it is possible to touch the screen of the monitor 3 and operate the switch section 4.

The frame holding unit 100 is disposed inside the opening window 2. Further, the frame holding unit 100 holds the frame F in a desired state. For example, the frame F is held as a frame where the rim is to be fitted into the groove formed in the eyeglasses lens. In the present example, a case where a sheet metal frame is held as the above frame is taken as an example.

A holder 310 used to measure the demonstration lens DL or the template MP removed from the frame F is attached to the attaching portion 300. For details of the holder 310, see, for example, JP-A-2013-068439.

The measuring unit 200 is disposed under the frame holding unit 100. In the sheet metal frame, the measuring unit 200 measures shape information (first shape information) regarding the projection part of the rim into which the eyeglasses lens is fitted. In the present example, the measuring unit 200 measures the shape information regarding the projection part of the rim by bringing the measurement stylus 281 to be described later into contact with the front surface and the projection part of the rim of the sheet metal frame and detecting the movement of the measurement stylus 281. In addition, the measuring unit 200 measures shape information (second shape information) regarding the peripheral edge of the demonstration lens DL or the template MP. In the present example, the measuring unit 200 measures shape information regarding the peripheral edge of the demonstration lens DL or the template MP by bringing the measurement stylus shaft 282 to be described later into contact with the peripheral edge of the demonstration lens DL or the template MP and detecting the movement of the measurement stylus shaft 282. In other words, the measuring unit 200 serves as a measuring unit for measuring the shape information regarding the projection part of the rim and also serves as a measuring unit for measuring the shape information regarding the peripheral edge of the demonstration lens DL or the template MP.

### <Frame Holding Unit>

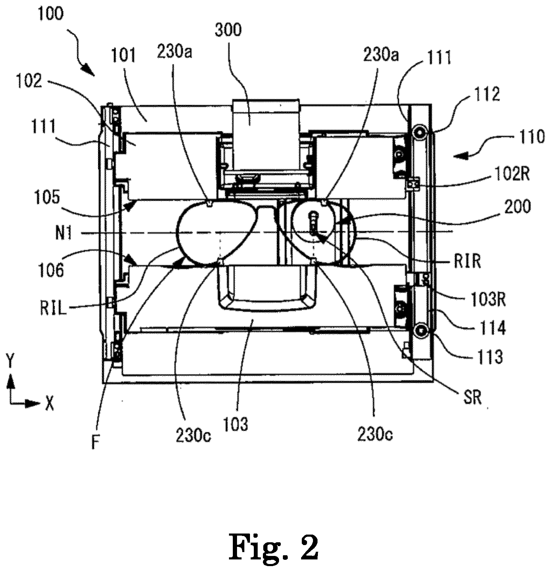

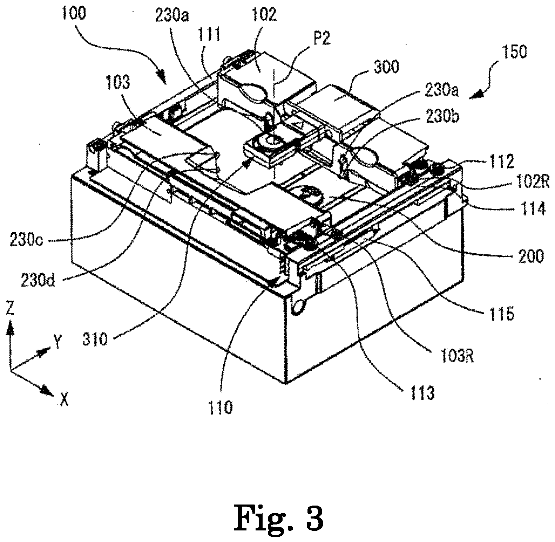

Figs. 2 and 3 are views illustrating the frame holding unit 100. Fig. 2 is a top view of the frame holding unit 100. The frame holding unit 100 of Fig. 2 is in a state of holding the frame F. Fig. 3 is a perspective view of the frame holding unit 100. The frame holding unit 100 of Fig. 3 is in a state in which the holder 310 is attached to the attaching portion 300. For example, the frame holding unit 100 includes a holding unit base 101, a first slider 102, a second slider 103, an opening and closing movement mechanism 110, a clamp mechanism 150, and the like.

The first slider 102 and the second slider 103 are disposed on the holding unit base 101. The first slider 102 has a first surface 105 that abuts on the upper sides of the right rim RIR and the left rim RIL of the frame F. The first slider 102 has a first surface 105 that abuts on the lower sides of the right rim RIR and the left rim RIL of the frame F. The first surface 105 and the second surface 106 are opposed to each other. The first surface 105 and the second surface 106 are moved by the opening and closing movement mechanism 110 in a direction in which the gap between the first surface 105 and the second surface 106 is opened and closed (a direction in which the gap expands and a direction in which the gap narrows). Further, on the first surface 105 and the second surface 106, clamp pins provided on the clamp mechanism 150 are disposed so as to protrude.

The clamp pin clamps (holds) the right and left rims from the thickness direction of the rim (the front side and the rear side when wearing eyeglasses). The first slider 102 is provided with a pair of clamp pins 230a and 230b as clamp pins. The clamp pins 230a and 230b are disposed in two places and clamp the upper sides of the right rim RIR and the left rim RIL. The second slider 103 is provided with a pair of clamp pins 230c and 230d as clamp pins. The clamp pins 230c and 230d are disposed in two places and clamp the lower sides of the right rim RIR and the left rim RIL.

The opening and closing movement mechanism 110 includes two guide rails 111, a pulley 112, a pulley 113, a wire 114, a spring 115, and the like. The guide rails 111 are disposed to the right and left of the holding unit base 101, respectively, and extend in the Y direction. The wire 114 is wound around the pulley 112 and the pulley 113. A right end portion 102R of the first slider 102 is attached to the left of the wire 114. A right end portion 103R of the second slider 103 is attached to the right of the wire 114. The spring 115 is constantly biased in the direction of closing the gap between the first slider 102 and the second slider 103. With the above configuration, the opening and closing movement mechanism 110 moves the first slider 102 and the second slider 103 in the direction in which the gap therebetween expands and in the direction in which the gap narrows, centering on the center line N1 with respect to the X direction. When the first slider 102 is moved, the second slider 103 is also moved in conjunction.

Fig. 4 is a schematic configuration view of the clamp mechanism 150. Fig. 4 shows the clamp mechanism 150 disposed to the left of the first slider 102. The clamp mechanism includes a base plate 151, the clamp pin 230a, the clamp pin 230b, a first arm 152, a second arm 153, a compression spring 157, a spring 156, a gear 158, a gear 159, a wire 160, a pulley 161, a drive unit 170.

The base plate 151 is disposed inside the first slider 102. The first arm 152 is rotatably held with respect to the base plate 151 by a rotation shaft 175. The gear 158 around a rotation shaft 175 is formed on the first arm 152. The second arm 153 is rotatably held with respect to the base plate 151 by a rotation shaft 176. The gear 159 around a rotation shaft 176 is formed on the second arm 153. The gear 158 and the gear 159 mesh with each other. The clamp pin 230a is attached to the tip of the first arm 152. The clamp pin 230b is attached to the tip of the second arm 153. The compression spring 157 is provided between the first arm 152 and the second arm 153. The compression spring 157 is biased in a direction in which the gap between the clamp pin 230a and the clamp pin 230b is constantly opened. One end of the spring 156 is attached to the rear end of the first arm 152. The wire 160 is fixed to the other end of the spring 156. The wire 160 is connected to the drive unit 170 through the pulley 161 rotatably attached to the base plate 151.

For example, the drive unit 170 includes a shaft 171, a motor 172, and the like. The shaft 171 winds up the wire 160 around itself. The motor 172 rotates the shaft 171. For example, when the motor 172 is driven and the wire 160 is wound up, the first arm 152 rotates counterclockwise around the rotation shaft 175. Here, since the gear 158 and the gear 159 mesh with each other, the second arm 153 rotates in the clockwise direction around the rotation shaft 176. In this way, the clamp pin 230a and the clamp pin 230b are interlocked and the gap is closed, and the upper side of the left rim RIL is clamped.

The clamp mechanism for clamping the upper side of the right rim RIR (that is, the clamp mechanism disposed to the right of the first slider 102) may have a configuration in which the clamp mechanism 150 shown in Fig. 4 is horizontally reversed. Further, the clamp mechanism for clamping the lower sides of the right rim RIR and the left rim RIL (that is, the clamp mechanism disposed to the left and to the right of the second slider 103, respectively) may have a configuration in which the clamp mechanism disposed on the first slider 102 is inverted upside down.

In addition, the motor 172 and the shaft 171 may be disposed in each of the clamp mechanisms 150 provided in four places, and may be configured to be commonly used in the four clamp mechanisms 150. In the present example, in any case, the configuration is such that clamp pins in four places are opened and closed at the same time.

### <Measuring Unit>

Figs. 5A and 5B are views illustrating the measuring unit 200. Fig. 5A is a schematic view showing a configuration of a moving unit 210. Fig. 5B is a schematic view showing a configuration of a measurement stylus holding unit 250. For example, the measuring unit 200 includes a base portion 211, the moving unit 210, the measurement stylus holding unit 250, and the like. The base portion 211 is a rectangular frame extending in the X direction and the Y direction and is disposed at the lower part of the frame holding unit 100. The moving unit 210 moves the measurement stylus holding unit 250 relative to the frame F, the demonstration lens DL, or the template MP. The measurement stylus holding unit 250 holds the measurement stylus shaft 282 and the measurement stylus 281 attached to the measurement stylus shaft 282. The measurement stylus 281 includes a first contact portion 283 that contacts the projection part of the rim and a second contact portion 284 that contacts the front surface of the rim.

The moving unit 210 moves the measurement stylus holding unit 250 in the X direction, the Y direction, and the Z direction. For example, the moving unit 210 includes a Y moving unit 230, an X moving unit 240, a Z moving unit 220, a motor 235, a motor 225, a motor 245, and the like. The Y moving unit 230 moves the measurement stylus holding unit 250 in the Y direction. The Y moving unit 230 moves the measurement stylus holding unit 250 in the Y direction along a guide rail (not shown) extending in the Y direction by the driving of the motor 235. The X moving unit 240 moves the Y moving unit 230 in the X direction. The X moving unit 240 moves the Y moving unit 230 in the X direction along a guide rail 241 extending in the X direction by the driving of the motor 245. The Z moving unit 220 moves the measurement stylus holding unit 250 in the Z direction. The Z moving unit 220 is attached to the Y moving unit 230 and moves the measurement stylus holding unit 250 in the Z direction along a guide rail 221 extending in the Z direction by the driving of the motor 225.

The measurement stylus holding unit 250 has a rotating unit 260 that rotates the measurement stylus shaft 282 around the rotation axis P1 extending in the Z direction. The rotating unit 260 has a rotation base 251 to which the measurement stylus shaft 282 is attached and a motor 265 for rotating the rotation base 251 around the rotation axis P1. The rotation base 251 holds the measurement stylus shaft 282 so as to be movable (tiltable) toward the tip of the second contact portion 284. Further, the rotation base 251 holds the measurement stylus shaft 282 so as to be movable in the Z direction. The positions in the X direction and the Y direction at the outer surface of the first contact portion 283 (that is, the surface on the distal end side of the second contact portion 284), the tip of the second contact portion 284, and the center of the measurement stylus shaft 282 are detected by an encoder 286 as a detector. The positions in the Z direction at the outer surface of the first contact portion 283, the tip of the second contact portion 284, and the center of the measurement stylus shaft 282 are detected by the encoder 288 as a detector. The measurement stylus holding unit 250 includes a measurement pressure applying mechanism (not shown) for applying a measurement pressure to press the measurement stylus 281 against the front surface and the projection part of the rim (the right rim RIR and the left rim RIL).

### <Control Portion>

Fig. 6 is a view showing a control system of the information acquiring apparatus 1 according to the present example. For example, the control portion 50 is electrically connected with a monitor 3, the switch section 4, a nonvolatile memory 55 (hereinafter referred to as "memory" 55), encoders (encoders 286 and 288), and motors (motors 172, 225, 235, 245, and 265) and the like. The memory 55 may be a non-transitory storage medium capable of retaining stored contents even when the supply of electric power is cut off. For example, a hard disk drive, a flash ROM, a detachable USB memory, or the like can be used as the memory 55. The memory 55 may store shape information (first shape information) regarding the projection part of the rim in the frame F which is measured by the measuring unit 200, shape information (second shape information) regarding the peripheral edge of the demonstration lens DL (or the template MP) which is measured by the measuring unit 200, the processing control data acquired by the control portion 50, and the like.

For example, the control portion 50 is implemented by a general CPU (processor), RAM, ROM, and the like. For example, the CPU controls driving of each part in the information acquiring apparatus 1. For example, the RAM temporarily stores various kinds of information. For example, various kinds of programs executed by the CPU are stored in the ROM. The control portion 50 may be constituted by a plurality of control portions (that is, a plurality of processors).

### <Control Operation>

Hereinafter, a procedure of acquiring the processing control data using the information acquiring apparatus 1 will be described together with the control operation of the information acquiring apparatus 1 with reference to the flowchart shown in Fig. 7.

In the present example, the operator sets a measurement mode by operating the switch section 4. For example, one of a frame trace mode for acquiring the first shape information which is the shape information regarding the projection part of the rim, and a pattern trace mode for acquiring the second shape information which is the shape information regarding the peripheral edge of the demonstration lens DL (or the template MP) is set by the operator. Either of the acquisition of the first shape information by the frame trace mode and the acquisition of the second shape information by the pattern trace mode may be performed first. Further, the acquisition of the first shape information by the frame trace mode and the acquisition of the second shape information by the pattern trace mode may be automatically and continuously performed by the control portion 50.

### <Acquisition of First Shape Information (S1)>

First, the operator acquires the first shape information which is the shape information regarding the projection part of the sheet metal frame having the rim on which the projection part to be fitted into the eyeglasses lens is formed. In the present example, the first shape information is acquired by measuring the sheet metal frame using the measuring unit 200 included in the information acquiring apparatus 1. Of course, the information acquiring apparatus 1 may be configured to acquire the first shape information by receiving the first shape information which has been measured by another device.

The operator operates the switch section 4 to set the frame trace mode. Further, the operator expands the gap between the first slider 102 and the second slider 103, and clamps the upper side and the lower side of the rim with clamp pins, such that the frame holding unit 100 holds the frame. By detecting a state in which the gap between the first slider 102 and the second slider 103 narrows rather than a later-described state in which the movement of the first slider 102 is restricted (the state in which the holder 310 is attached to the attaching portion 300), the control portion 50 may automatically set the measurement mode to the frame trace mode.

Subsequently, the operator operates the switch section 4 to start the measurement of the first shape information. When a measurement start signal is input, the control portion 50 controls the driving of the measuring unit 200 to measure the first shape information regarding the right rim RIR. The control portion 50 moves the measurement stylus 281 from the initial position to the measurement start position and brings the measurement stylus 281 and the right rim RIR of the frame F into contact with each other. For example, in the present example, the position at which the first contact portion 283 of the measurement stylus 281 is disposed at the position SR (see Fig. 2) on the side of the right rim RIR is set to the initial position in the X and Y directions of the measurement stylus 281. For the position SR, the position in the X direction may be the center position of the clamp pins 230a and 230b, and the position in the Y direction may be the position of the center line N1. Of course, the initial position may be set at any position.

The control portion 50 rotates the rotating unit 260 so that the tip of the second contact portion 284 faces the clamp pins 230a and 230b under the right rim RIR at the initial position SR. Further, in order to avoid contact of the measurement stylus 281 with the clamp pins 230c and 230d, the control portion 50 moves the measurement stylus holding unit 250 in the X direction by a predetermined distance. Since the positions of the clamp pins are already known, the predetermined distance may be set in advance. Further, the control portion 50 moves the measurement stylus holding unit 250 toward the rim such that the measurement stylus 281 contacts the right rim RIR.

Figs. 8A and 8B are views showing a positional relationship between the frame F and the measurement stylus 281. Fig. 8A shows a state in which the measurement stylus 281 is brought into contact with the frame F. Fig. 8B shows a cross section taken along A-A' in Fig. 8A. In the present example, the control portion 50 moves the measurement stylus holding unit 250 toward the rim side such that the outer surface 283a of the first contact portion 283 contact the projection part RIRa of the right rim RIR (that is, the portion where the eyeglasses lens is fitted), and such that the side surface of the second contact portion 284 contacts the front face RIRb of the right rim RIR. For example, in this way, the measurement stylus 281 is moved from the initial position SR to the measurement start position, and the measurement stylus 281 and the right rim RIR contact each other.

The control portion 50 moves the measurement stylus 281 along the right rim RIR while maintaining the state in which the outer surface 283a of the first contact portion 283 and the side surface of the second contact portion 284 are in contact with the right rim RIR. Here, the control portion 50 rotates the rotation base 251 by driving the motor 265 and rotates the measurement stylus shaft 282 and the measurement stylus 281 around the rotation axis P1 (see Fig. 5B). The measurement stylus 281 moves in the X direction, the Y direction, and the Z direction following the change in the projection part RIRa of the rim. In the present example, positions of the measurement stylus 281 in the X direction and the Y direction at the time of tracing are detected by the encoder 286, and the position of the measurement stylus 281 in the Z direction at the time of tracing is detected by the encoder 288. In order to avoid contact of the measurement stylus 281 and the clamp pins, a part where the right rim RIR is clamped by the clamp pins 230a and 230b and the clamp pins 230c and 230d (hereinafter, referred to as a clamp portion) may move the measurement stylus 281 in the Z direction by a predetermined distance such that the measurement stylus 281 passes under the right rim RIR. In this way, the measurement stylus 281 is moved in the circumferential direction of the right rim RIR and the projection part RIRa of the right rim RIR is traced.

The control portion 50 acquires the first shape information regarding the projection part at a plurality of rotation angles (vector angles) of the sheet metal frame. For example, the control portion 50 obtains a radial length from the reference position to the projection part of the right rim RIR for each rotation angle of the rotation base 251. For example, in the present example, the rotation angle of the rotation base 251 is set at 0.36 degrees. Further, for example, in the present example, the reference position is set at the position of the rotation axis Z1. For example, the radial length rn of the rotation base 251 at a certain rotation angle θn is determined based on the rotation angle of the measurement stylus shaft 282 and the distance (known from the design) from the rotation center to the outer surface 283a of the first contact portion 283. Further, the control portion 50 obtains the positions of the projection part RIRa of the rim in the X direction, the Y direction, and the Z direction for each rotation angle of the rotation base 251 based on the detection signals of the encoder 286 and the encoder 288. Three-dimensional shape data (xn, yn, zn) (n = 1, 2, 3,..., N) of the entire circumference in the projection part RIRa of the right rim RIR is acquired by rotating the rotation base 251 once. In other words, three-dimensional shape data of the groove of the right demonstration lens DL fitted in the right rim RIR is acquired by rotating the rotation base 251 once.

For example, in the present example, such three-dimensional shape data is represented by three-dimensional orthogonal coordinates. The three-dimensional shape data may be appropriately converted by (rn, zn, θn) (n= 1, 2, 3,..., N) by representing the positions in the X direction and the Y direction by two-dimensional polar coordinates of the radial length rn and the rotation angle θn in representing the position in the Z direction by the Z coordinate.

For example, upon completion of measuring the right rim RIR, the operator acquires the three-dimensional shape data of the entire circumference of the projection part RIRa in the left rim RIL in the same manner as described above. The three-dimensional shape data of the projection part in the left rim RIL may be acquired by horizontally reversing the three-dimensional shape data of the projection part RIRa in the right rim RIR. The control portion 50 obtains the distance between the centers of frames (FPD), the curve value of the frame, the warp angle of the frame, and the like, based on the three-dimensional shape data of the right rim RIR and the left rim RIL and the movement amount of the measurement stylus holding unit 250. For example, the control portion 50 stores the acquired three-dimensional shape data in the memory 55 as first shape information.

### <Acquisition of Second Shape Information (S2)>

Next, the operator acquires the second shape information which is the shape information regarding the peripheral edge of the demonstration lens DL or the template MP of the sheet metal frame. In the present example, the second shape information is acquired by measuring the demonstration lens DL using the measuring unit 200 included in the information acquiring apparatus 1. Of course, the information acquiring apparatus 1 may be configured to acquire the second shape information by receiving the second shape information which has been measured by another device.

The operator operates the switch section 4 to set the pattern trace mode. In addition, the operator attaches the demonstration lens (right demonstration lens) DL removed from the right rim RIR to the holder 310, expands the gap between the first slider 102 and the second slider 103, and attaches the holder 310 to the attaching portion 300. Here, the first slider 102 comes into contact with the holder 310, and movement of the first slider 102 forward (toward the operator) is restricted. By detecting the state where the movement of the first slider 102 is restricted, the control portion 50 may automatically set the trace mode to the pattern trace mode.

Subsequently, the operator operates the switch section 4 to start the measurement of the second shape information. When a measurement start signal is input, the control portion 50 controls the driving of the measuring unit 200 to measure the second shape information of the demonstration lens. The control portion 50 moves the measurement stylus shaft 282 from the initial position to the measurement starting position and brings the center portion 285 of the measurement stylus shaft 282 in the Z direction (hatched portion shown in Fig. 5B) into contact with the peripheral edge of the right demonstration lens. For example, in the present example, the position of the measurement stylus shaft 282 in the X direction is set at the center position, halfway between the clamp pins 230a and 230b. Further, for example, in the example, the initial position of the measurement stylus shaft 282 in the Y direction is set at the position of the attachment center axis P2 (see Fig. 3) of the demonstration lens DL.

In such an initial position, the control portion 50 drives the measurement stylus holding unit 250 so that the center portion 285 of the measurement stylus shaft 282 is positioned at the height of the demonstration lens DL attached to the holder 310. Further, the control portion 50 moves the measurement stylus holding unit 250 toward the demonstration lens DL side such that the center portion 285 of the measurement stylus shaft 282 comes into contact with the peripheral edge of the demonstration lens DL. For example, in this way, the measurement stylus shaft 282 is moved from the initial position to the measurement start position, and the center portion 285 of the measurement stylus shaft 281 is brought into contact with the peripheral edge of the right demonstration lens.

The control portion 50 moves the measurement stylus shaft 282 along the peripheral edge of the right demonstration lens. Here, the control portion 50 rotates the rotation base 251 by driving the motor 265 and rotates the measurement stylus shaft 282 around the rotation axis P1 (see Fig. 5B). The measurement stylus shaft 282 moves in the X direction and the Y direction depending on the change of the peripheral edge of the demonstration lens DL. In the present example, at the time of tracing, the positions of the measurement stylus shaft 282 in the X direction and the Y direction are detected by the encoder 286. As a result, the measurement stylus shaft 282 is moved along the peripheral edge of the right demonstration lens, and the peripheral edge of the right demonstration lens is traced.

The control portion 50 acquires the second shape information at a plurality of rotation angles of the demonstration lens of the sheet metal frame. For example, the control portion 50 obtains a radial length from the reference position to the peripheral edge of the right demonstration lens for each rotation angle θn of the rotation base 251. For example, in the present example, the reference position is set at the position of attachment center axis P2. In addition, the control portion 50 obtains the positions of the peripheral edges of the demonstration lens DL in the X direction and the Y direction for each rotation angle of the rotation base 251, based on the detection signal of the encoder 286. Two-dimensional shape data (xn, yn) (n = 1, 2, 3,..., N) of the entire periphery of the right demonstration lens is acquired by rotating the rotation base 251.

For example, upon completing the measurement of the right demonstration lens, the operator acquires the two-dimensional shape data of the entire periphery of the peripheries of the left demonstration lens in the same manner as described above. The two-dimensional shape data on the periphery of the left demonstration lens may be acquired by horizontally converting the two-dimensional shape data on the periphery of the right demonstration lens. For example, the control portion 50 stores the acquired two-dimensional shape data in the memory 55 as second shape information.

### <Supplement of Clamp Portion in First Shape Information (S3)>

Here, the shape information on the clamp portion is missing in the first shape information acquired in step S1. Therefore, the control portion 50 supplements the shape information on the clamp portion in the first shape information. For example, the control portion 50 obtains a quadratic function from the first shape information on any point (for example, 20 points, etc.) corresponding to any number of rotation angle θn in the front part of the clamp portion. Further, for example, the control portion 50 obtains a quadratic function from the first shape information on any point corresponding to any angle θn in the rear part of the clamp portion. For example, the control portion 50 can acquire the first shape information supplementing the clamping portion by obtaining approximate functions approximating respective quadratic functions.

### <Acquisition of Circumferential Length of Projection part of Rim (S4)>

The control portion 50 acquires the length of the circumference formed by of the projection part RIRa of the rim from the first shape information supplemented by the clamp portion. For example, the control portion 50 obtains the length of the circumference (circumferential length) of the projection part RIRa of the rim using the three-dimensional shape data of projection part RIRa of the rim stored in the memory 55. For example, as described above, the three-dimensional shape data of the projection part RIRa of the rim is data representing the position of the projection part RIRa of the rim in three-dimensional orthogonal coordinates (that is, XYZ coordinates) for each rotation angle of the rotation base 251. For example, the control portion 50 calculates the distances between the position coordinates, respectively, and adds the distances, which makes it possible to obtain the length W1 the circumference formed by the projection part RIRa of the rim.

### <Acquisition of Internal Shape of Rim Formed by Projection Part (S5)>

For example, the control portion 50 acquires the internal shape of the rim formed by the projection part RIRa from the first shape information supplemented by the clamp portion. For example, the control portion 50 acquires the internal shape of the rim formed by the projection part RIRa using the three-dimensional shape data of projection part RIRa of the rim stored in the memory 55. For example, as described above, the three-dimensional shape data of projection part RIRa of the rim is data representing the position of the projection part RIRa of the rim in the three-dimensional orthogonal coordinates (that is, the XYZ coordinates) for each rotation angle of the rotation base 251. In the present example, the first shape information is three-dimensional shape data and the second shape information is two-dimensional shape data. Therefore, the control portion 50 may make the Z coordinate to be omitted from the first shape information and make the first shape information and the second shape information represented in the same dimension. For example, the control portion 50 can acquire the internal shape of the rim formed by the projection part RIRa by joining the respective position coordinates.

### <Acquisition of External Shape of Demonstration Lens (S6)>

Further, for example, the control portion 50 acquires the external shape of the demonstration lens DL from the second shape information. For example, the control portion 50 acquires the external shape of the demonstration lens DL using the two-dimensional shape data of the peripheral edge of the demonstration lens DL stored in the memory 55. For example, as described above, the two-dimensional shape data of the peripheral edge of the demonstration lens DL is data representing the position of the peripheral position of the demonstration lens DL in two-dimensional orthogonal coordinates (that is, XY coordinates) for each rotation angle of the rotation base 251. For example, the control portion 50 can acquire the external shape of the demonstration lens DL by joining the respective position coordinates.

### <Acquisition of Groove Information of Eyeglasses Lens (S7)>

When acquiring the first shape information which is the shape information regarding the projection part of the rim and the second shape information which is the shape information regarding the peripheral edge of the demonstration lens respectively, the control portion 50 acquires groove information regarding a groove to be formed in the eyeglasses lens for fitting the eyeglasses lens into the sheet metal frame, based on the first shape information and the second shape information. For example, the groove information may be at least one of the depth of the groove, the position of the groove, the width of the groove, and the like. In the example, as groove information of the groove formed in the eyeglasses lens, a case where the groove depth information is acquired will be exemplified. For example, the groove is formed in the peripheral edge (that is, the edge surface) of the eyeglasses lens. The depth of the groove is depth of the groove which is formed from the peripheral edge of the eyeglasses lens toward the center of the eyeglasses lens and into which the projection part of the rim of the sheet metal frame is fitted. In other words, the depth of the groove is the height of the projection part of the rim of the sheet metal frame.

The control portion 50 acquires the depth of the groove based on the internal shape of the rim formed by the projection part acquired from the first shape information and the external shape of the demonstration lens DL acquired from the second shape information. For example, the control portion 50 calculates the boxing centers B (see Fig. 9) of the internal shape 20 of the rim formed by the projection part and the external shape 30 of the demonstration lens DL and superimposes them on each other. For example, the boxing center B is an intersection of straight lines connecting the midpoints of the opposing sides in the quadrangle surrounding each piece of shape information.

Fig. 9 is an example of a state in which the boxing centers B are superimposed on each other. In Fig. 9, the internal shape 20 of the rim formed by the projection part and the quadrangle surrounding the internal shape 20 of the rim formed by the projection part are indicated by dotted lines. Further, in Fig. 9, the external shape 30 of the demonstration lens DL and the quadrangle surrounding the external shape 30 of the demonstration lens DL are indicated by solid lines. For example, the control portion 50 calculates the length of the line segment C1 from the boxing center B to the internal shape 20 of the rim formed by the projection part and the length of the line segment C2 from the boxing center B to the external shape 30 of the demonstration lens DL Calculate for each vector angle αn.

Figs. 10A and 10B are views showing a length change of the line segments C 1 and C2 for each vector angle αn. Fig. 10A shows a state before alignment of minimum values to be described later, and Fig. 10B shows a state after the alignment of the minimum values to be described later. The control portion 50 obtains the minimum value Min1 of the length of the line segment C 1 and the minimum value Min2 of the length of the line segment C2, respectively. Further, the control portion 50 rotates at least one of the internal shape 20 of the rim formed by the projection part and the external shape 30 of the demonstration lens DL such that the minimum value Min1 and the minimum value Min2 are matched with each other with the boxing center B as the rotation center. For example, in the present example, the external shape 30 of the demonstration lens DL is rotated around the boxing center B as the rotation center. As a result, the internal shape 20 of the rim formed by the projection part and the external shape 30 of the demonstration lens DL are superimposed on each other as shown in Fig. 11 (described later), and the vertical axis V and the horizontal axis H are matched with each other. The minimum values Min 1 and Min 2 are aligned at a certain vector angle αx, and are as shown in Fig. 10A to Fig. 10B. In the present example, the configuration in which the minimum values of the lengths of the line segment C1 and the line segment C2 are aligned has been described by way of example, but the maximum values of the lengths of the line segment C1 and the line segment C2 may be aligned.

The control portion 50 executes a difference process between the internal shape 20 of the rim formed by the projection part and the external shape 30 of the demonstration lens DL to acquire the depth of the groove. That is, the control portion 50 acquires the difference between the internal shape 20 of the rim formed by the projection part and the external shape 30 of the demonstration lens DL as the depth of the groove of the eyeglasses lens. Fig. 11 is a view illustrating the depth of the groove. For example, the control portion 50 calculates the difference D by subtracting the length of the line segment C1 from the boxing center B to the internal shape 20 of the rim formed by the projection part from the line segment C2 from the boxing center B to the external shape 30 of the demonstration lens DL Calculate, for each vector angle αn. Further, the control portion 50 stores each vector angle αn and the difference D corresponding to each vector angle αn (in other words, the depth D of the groove corresponding to each vector angle αn), in the memory 55.

Here, the control portion 50 may determine whether or not the vertical axes V and the horizontal axes H in the internal shape 20 and the external shape 30 coincide with each other. In this case, the control portion 50 rotates any one of the internal shape 20 or the external shape 30 around the boxing center B by a predetermined angle, and obtains the difference D at each vector angle αn in the same manner as described above. For example, the control portion 50 repeats the above-mentioned process for a predetermined number of times, and determines that the rotation angle where the difference D at each vector angle has a constant value is the angle where the vertical axes V and the horizontal axes H in the internal shape 20 and the external shape 30 coincide with each other.

### <Acquisition of Target Lens Shape Data (S8)>

Subsequently, the control portion 50 acquires the target lens shape data which is the shape data when processing the eyeglasses lens. In the present example, the target lens shape data is acquired based on the circumferential length W1 of the projection part of the rim obtained in step S4, the internal shape 20 of the rim formed by the projection part obtained in step S5, the depth D of the groove obtained in step S7.

For example, the operator operates the monitor 3 and the switch section 4 to input processing conditions of the eyeglasses lens. Further, for example, the operator operates the monitor 3 and the switch section 4 to input the frame shape data of the frame F, the layout data of the eyeglasses lens, the lens shape data of the eyeglasses lens, and the like. In the present example, the frame shape data, such as frame shape data (for example, the distance between the centers of frames, a curve value of the frame, the warp angle of the frame, and the like) that has been measured based on the projection part of the rim are input. In the present example, layout data, such as layout data for the external shape 30 of the demonstration lens DL (for example, the positional relationship between the external shape 30 of the demonstration lens DL and the optical center of the lens, and the like) is input. In the present example, lens shape data, such as lens shape data that has been measured based on the external shape 30 of the demonstration lens DL (for example, position information regarding the position on the front refractive surface and the rear refractive surface of the eyeglasses lens corresponding to the external shape 30 of the demonstration lens DL, the thickness of the edge surface at the position corresponding to the external shape 30 of the demonstration lens DL, the curve value at the front refractive surface of the eyeglasses lens, and the like) are inputted. For example, the operator may measure lens shape data in advance using an eyeglasses lens processing apparatus or the like and input (or receive) the lens shape data. Of course, the information acquiring apparatus 1 may have a configuration for measuring lens shape data.

For example, when acquiring the frame shape data, the layout data, the lens shape data, and the like, the control portion 50 automatically sets, with respect to the groove formed on the eyeglasses lens, the depth of the groove, the position of the groove, the curve of the groove, and the like for each vector angle. For example, the position of the groove can be obtained by subtracting the depth D of the groove from the radial length at each vector angle in the external shape 30 of the demonstration lens DL stored in the memory 55. The position of the groove may be set so as to pass through position of half of the portion where the thickness of the edge is the thinnest based on the edge thickness of the eyeglasses lens. For example, the curved value of the frame F may be used as the curve of the groove.

The position of the set groove, the curve of the groove, the depth of the groove, and the like, can be adjusted manually by the operator. In this case, the control portion 50 causes the monitor 3 to display the groove information, and sets the groove information based on the operation signal from the switch section 4 for adjusting the groove information on the monitor 3. Fig. 12 shows an example of the display screen of the monitor 3. For example, on the monitor 3, the target lens shape data 40, the input field 43, the cross-sectional shape 44 of the eyeglasses lens, the cursor 45, and the like are displayed. For example, the operator operates the cursor 45 to specify the observation direction of the edge surface of the eyeglasses lens, and displays the cross-sectional shape 44. Further, for example, the operator operates the input field 43 to change the position of the groove, the curve of the groove, the depth of the groove, and the like. As a result, it is possible to correct the groove formed in the eyeglasses lens to a more optimum state.

Subsequently, the control portion 50 acquires the three-dimensional shape data regarding the position of the groove to be formed in the eyeglasses lens to be processed, and acquires the circumferential length W2 of the groove based on three-dimensional shape data. For example, in the present example, three-dimensional shape data (rn, Zn, θn) (n = 1, 2, 3,..., N) of the position of the groove are acquired, based on position information regarding the positions on the front refractive surface and the rear refractive surface of the eyeglasses lens corresponding to the external shape 30 of the demonstration lens DL, the thickness of the edge surface at the position corresponding to the external shape 30 of the demonstration lens DL, and the set groove information. Further, the control portion 50 calculates the distances between the position coordinates for each vector angle, and adds the distances to obtain the circumferential length W2 of the groove.

Here, in the case where the circumferential length W1 of the projection part of the rim stored in the memory 55 is different from the circumferential length W2 of the acquired groove, the control portion 50, the size of the internal shape 20 of the rim formed by the projection part may be adjusted such that the circumferential length W1 of the projection part of the rim and the circumferential length W2 of the groove are the same (substantially the same). For example, when the circumferential length W1 is less than the circumferential length W2, the size of the internal shape 20 of the rim formed by the projection part is enlarged as a whole such that the circumferential length W1 is equal to the circumferential length W2. For example, when the circumferential length W1 is greater than the circumferential length W2, the size of the internal shape 20 of the rim formed by the projection part is reduced as a whole such that the circumferential length W1 is equal to the circumferential length W2. Accordingly, in the target lens shape data 40, the position of the bottom 41 of the groove formed on the peripheral edge (edge surface) of the eyeglasses lens is determined. Further, the control portion 50 adds the determined position of the bottom 41 of the groove and the depth D of the groove for each vector angle. In this way, in the target lens shape data 40, the position of the outer surface 42 of the eyeglasses lens is determined.

### <Acquisition of Processing Control Data (S9)>

Upon acquiring the target lens shape data, the control portion 50 acquires processing control data for forming, on the eyeglasses lens, a groove for fitting the eyeglasses lens into the sheet metal frame. For example, the control portion 50 acquires processing control data using the acquired depth D of the groove, the target lens shape data 40, the eyeglasses lens layout data, processing conditions of the eyeglasses lens, and the like. In the present example, the processing control data for controlling the rotation of a chuck shaft, the movement of the chuck shaft, and the like in the eyeglasses lens processing apparatus or the like is computed by the control portion 50. For example, the control portion 50 may acquire the processing control data and transmit the acquired data to the lens peripheral edge processing apparatus. Of course, the depth D of the groove, the target lens shape data 40, the layout data of the eyeglasses lens, the processing conditions of the eyeglasses lens, and the like are transmitted to the eyeglasses lens processing apparatus, and the processing control data is calculated by the control portion of the eyeglasses lens processing apparatus. For example, the control portion of the lens peripheral edge processing apparatus performs processing of the eyeglasses lens based on the processing control data. In this way, it is possible for the operator to process the eyeglasses lens with an appropriate depth of the groove, and it is possible to acquire the eyeglasses lens with less distortion and rattling when being fitted into the frame F. In addition, it is possible to acquire a eyeglasses lens with good appearance in a state of being fitted in the frame F.

As described above, for example, the information acquiring apparatus according to the present example acquires the first shape information regarding the shape of the projection part of the rim where the eyeglasses lens is fitted into the sheet metal frame and the second shape information regarding the shape of the peripheral edge of the demonstration lens (or template) of the sheet metal frame, and acquires the groove information regarding the groove which are formed on the eyeglasses lens for fitting the eyeglasses lens into the sheet metal frame based on the first shape information and the second shape information. The operator can form an appropriate groove on the eyeglasses lens using the groove information. In addition, the operator can suppress variations in processing of the eyeglasses lens by the operator using the groove information.

Further, for example, in the information acquiring apparatus according to the present example, the first shape information regarding the projection part at a plurality of vector angles of the sheet metal frame and the second shape information regarding the demonstration lens (or the template) of the sheet metal frame at a plurality of vector angles are acquired and groove information at a plurality of vector angles is acquired based on the first shape information and the second shape information. In this way, it is possible to obtain detailed information regarding the groove formed in the eyeglasses lens, which makes it possible to form the groove on the eyeglasses lens with more accuracy.

Further, the information acquiring apparatus according to the present example may acquire the internal shape of the rim formed by the projection part from the first shape information, acquire the external shape of the demonstration lens (or the template) from the second shape information, and acquire the groove information based on the internal shape and the external shape. For example, the information acquiring apparatus executes a difference process between the internal shape and the external shape to acquire the groove information. It is difficult to acquire groove information only from the demonstration lens (or template). However, with such a configuration, the groove information regarding the groove formed in the eyeglasses lens can be easily acquired.

Further, for example, the information acquiring apparatus according to the present example causes the display to display the groove information, and sets the groove information based on the operation signal from the operation portion for adjusting the groove information on the display. Therefore, the operator can correct the groove formed in the eyeglasses lens to a more optimum state.

Further, for example, the information acquiring apparatus according to the present example acquires processing control data for forming a groove for fitting the eyeglasses lens into a sheet metal frame on the eyeglasses lens, based on the groove information.

### <Modification>

In the present example, the configuration of acquiring the first shape information which is the shape information regarding the projection part of the rim and the second shape information which is the shape information regarding the peripheral edge of the demonstration lens, respectively, by measuring the projection part of the rim and the peripheral edge of the demonstration lens using the measuring unit 200 has been described by way of example, but, the present disclosure is not limited thereto. For example, the information acquiring apparatus in the present example may have a configuration including the first measuring unit for acquiring the shape information regarding the projection part of the rim and the second measuring unit for acquiring the shape information regarding the demonstration lens or the template. In this case, acquisition of the first shape information and acquisition of the second shape information are performed at the same time, and the measurement time can be shortened.

In addition, in the present example, the configuration of achieving the acquisition by measuring the first shape information and the second shape information, respectively, has been described by way of example, but the present disclosure is not limited thereto. For example, the first shape information and the second shape information may be acquired from data in which at least one of the first shape information and the second shape information is accumulated. In this case, the information acquiring apparatus may have a configuration in which the first shape information or the second shape information that is measured in advance is accumulated in the memory 55, or the first shape information or the second shape information may access a cloud or a server in which the first shape information or the second shape information that is measured in advance is stored. As an example, the first shape information which is the shape information regarding the projection part of the rim may be acquired by measuring the projection part of the rim using the measuring unit 200, and the second shape information which is the shape information regarding the peripheral edge of the demonstration lens (or the template) may be acquired by calling corresponding data from the accumulated data as described above and setting the data.

In the present example, the configuration in which the measuring unit 200 brings the measurement stylus 281 into contact with the projection part of the rim to acquire the first shape information, and by bringing the measurement stylus shaft 282 into contact with the peripheral edge of the demonstration lens to acquire the second shape information has been described by way of example, but the present disclosure is not limited thereto. For example, the measuring unit 200 may acquire the first shape information and the second shape information in a non-contact manner. In this case, the information acquiring apparatus may include a light projecting optical system for projecting the measurement light beam on the projection part of the rim and the peripheral edge of the demonstration lens (the groove formed on the peripheral edge of the demonstration lens), and a light receiving optical system for receiving the reflected light beam which the reflected measurement light beam. As described above, in the case of the configuration having the first measuring unit and the second measuring unit, at least one of a non-contact type measuring unit, and a contact type measuring unit that uses the measurement stylus 281 and the measurement stylus 282 may be used.

In the present example, the configuration in which the measuring unit 200 brings the measurement stylus 281 into contact with the front surface of the rim has been described by way of example, but the present disclosure is not limited thereto. For example, a configuration in which the measurement stylus 281 is brought in contact with the rear surface of the rim may be implemented. However, in this case, it is necessary to move the measurement stylus 281 along the rear surface of the rim so as to avoid contact between the nose pad portion of the frame F and the measurement stylus 281. Since the first shape information is also missing in the nose pad portion in addition to the clamp portion, it is desired that the measurement stylus 281 is brought into contact with the front surface of the rim.

In the present example, the configuration in which the clamp portion of the first shape information is supplemented using the approximate function has been described by way of example, but the present disclosure is not limited thereto. For example, the configuration in which the shape information regarding the clamp portion may be supplemented based on the second shape information acquired in step S2 may be implemented. For example, in this case, the control portion 50 extracts the shape information at each point at the rotation angle θn corresponding to the clamp portion of the first shape information, out of the shape information at each rotation angle θn in the second shape information. Subsequently, the control portion 50 expands or reduces the extracted shape information as a whole such that the points at both ends of the extracted shape information coincide (substantially coincide) with the points before and after the clamp portion in the first shape information. In the present example, since the first shape information is the shape information regarding the shape of the projection part of the rim (the shape information regarding the groove of the demonstration lens DL), the second shape information is the shape information regarding the peripheral edge of the demonstration lens DL, and the second shape information is larger than the first shape information, the extracted shape information is reduced as a whole. For example, using the shape information, the control portion 50 may supplement the shape information regarding the clamp portion in the first shape information.

In the present example, the configuration in which the depth of the groove formed in the eyeglasses lens is set for each vector angle (that is, the depth of the groove is different for each vector angle) has been described by way of example, but the present disclosure is not limited thereto. For example, the depth of the groove may be set to be a constant value at each vector angle. For example, in this case, the depth of the groove may be acquired for each vector angle, and the largest one of values of the depth of the groove may be employed as the constant value.

In the present example, the configuration of acquiring the depth of the groove as the groove information has been described by way of example, but the width of the groove may be acquired as the groove information. In this case, it is possible to detect the thickness of the projection part of the rim in the frame F and acquire the thickness as the width of the groove. For example, in the present example, the outer surface 283a of the first contact portion 283 of the measurement stylus 281 is brought into contact with the projection part of the rim, the side surface of the second contact portion 284 is brought into contact with the front surface of the rim, and the position of the measurement stylus 281 in the Z direction at this time is detected by the encoder 288. For example, the control portion 50 may move the measurement stylus holding unit 250 such that the outer surface 283a of the first contact portion 283 of the measurement stylus 281 contacts the projection part of the rim and the side surface of the second contact portion 284 contacts the rear surface of the rim. Further, for example, the control portion 50 may detect the position in the Z direction in a state where the measurement stylus 281 is brought into contact with the projection part of the rim and the rear surface of the rim, using the encoder 288. For example, the control portion 50 can detect the thickness of the projection part of the rim by obtaining the difference between the positions in the Z direction. That is, by obtaining the difference between the positions in the Z direction, it is possible to acquire the width of the groove formed in the eyeglasses lens.

In the present example, the configuration in which the target lens shape data is acquired based on the first shape information and the second shape information, and the processing control data is acquired based on the target lens shape data has been described by way of example, but the present disclosure is not limited thereto. For example, the processing control data may be directly acquired based on the first shape information and the second shape information.

In the present example, the case where the target lens shape data and the processing control data are acquired by the information acquiring apparatus 1 has been described by way of example, but the present disclosure is not limited there. Of course, the target lens shape data and the processing control data may be acquired by another device (for example, an eyeglasses lens processing apparatus disclosed in JP-A-2016-190287, etc.). In this case, a configuration in which the first shape information and the second shape information are transmitted to another device may be implemented, or a configuration in which the circumferential length and the internal shape of the rim formed by the projection part acquired from the first shape information and the second shape and the external shape of the demonstration lens acquired from the second shape information are transmitted to separate apparatuses may be implemented.

1 information acquiring apparatus
100 frame holding unit
150 clamp mechanism
200 measuring unit
210 moving unit
250 measurement stylus holding unit
281 measurement stylus
282 measurement stylus shaft

## Claims

1. An information acquiring apparatus (1) that acquires information for processing a peripheral edge of an eyeglasses lens, **characterized by**:
a first shape information acquiring portion (200) configured to acquire first shape information regarding a shape of a projection part (RIRa) of an eyeglasses frame (F) having a rim (RIR), the projection part (RIRa) being formed on the rim (RIR) to be fitted into the eyeglasses lens;
a second shape information acquiring portion (200) configured to acquire second shape information regarding a shape of a peripheral edge of a demonstration lens (DL) or a template (MP) of the eyeglasses frame (F); and
a groove information acquiring portion (50) configured to acquire groove information regarding a groove formed in the eyeglasses lens for fitting the eyeglasses lens into the eyeglasses frame (F), based on the first shape information and the second shape information.

2. The information acquiring apparatus (1) according to claim 1,
wherein the first shape information acquiring portion (200) acquires the first shape information regarding the projection part (RIRa) at a plurality of vector angles (αₙ) of the eyeglasses frame (F),
the second shape information acquiring portion acquires the second shape information at a plurality of vector angles (αₙ) of the demonstration lens (DL) or the template (MP) of the eyeglasses frame (F) corresponding to the plurality of vector angles (αₙ) of the eyeglasses frame (F), and
the groove information acquiring portion (50) acquires the groove information at the plurality of vector angles (αₙ) based on the first shape information and the second shape information

3. The information acquiring apparatus (1) according to claim 1 or 2,
wherein the groove information acquiring portion (50) acquires an internal shape (20) of the rim (RIR) formed by the projection part (RIRa) from the first shape information, acquires an external shape (30) of the demonstration lens (DL) or the template (MP) from the second shape information, and acquires the groove information based on the internal shape (20) and the external shape (30).

4. The information acquiring apparatus (1) according to claim 3,
wherein the groove information acquiring portion (50) executes a difference processing between the internal shape (20) and the external shape (30) to acquire the groove information.

5. The information acquiring apparatus (1) according to any one of claims 1 to 4,
wherein the groove information acquiring portion (50) causes a display portion (3) to display the groove information, and sets the groove information based on an operation signal from an operation portion input by an operator for adjusting the groove information on the display portion.

6. The information acquiring apparatus (1) according to any one of claims 1 to 5, further comprising:
a processing control data acquiring portion (50) configured to acquire processing control data for forming the groove on the eyeglasses lens based on the groove information, the groove being formed for fitting the eyeglasses lens into the eyeglasses frame (F).

7. The information acquiring apparatus (1) according to any one of claims 1 to 6,
wherein the groove information is depth information of the groove.

8. An information acquiring method of an information acquiring apparatus (1) that acquires information for processing a peripheral edge of an eyeglasses lens,
wherein the information acquiring method, executed by a processor (50) of the information acquiring apparatus (1) is **characterized by**:
a step of acquiring first shape information regarding a shape of a projection part (RIRa) of an eyeglasses frame (F) having a rim (RIR), the projection part (RIRa) being formed on the rim (RIR) to be fitted into the eyeglasses lens;
a step of acquiring second shape information regarding a shape of a peripheral edge of a demonstration lens (DL) or a template (MP) of the eyeglasses frame; and
a step of acquiring groove information regarding a groove formed in the eyeglasses lens for fitting the eyeglasses lens into the eyeglasses frame (F), based on the first shape information and the second shape information.

9. An information acquiring program used in the information acquiring apparatus (1) according to any one of claims 1 to 7, **characterized in that**
the information acquiring program is executed by a processor (50) of the information acquiring apparatus (1) to cause the information acquiring apparatus (1) to execute:
a step of acquiring first shape information regarding a shape of a projection part (RIRa) of an eyeglasses frame having a rim (RIR), the projection part (RIRa) being formed on the rim (RIR) to be fitted into the eyeglasses lens;
a step of acquiring second shape information regarding a shape of a peripheral edge of a demonstration lens (DL) or a template (MP) of the eyeglasses frame; and
a step of acquiring groove information regarding a groove formed in the eyeglasses lens for fitting the eyeglasses lens into the eyeglasses frame (F), based on the first shape information and the second shape information.

## Patentansprüche

1. Informationserfassungsvorrichtung (1), die Information zur Verarbeitung eines peripheren Randes einer Brillenlinse erfasst, **gekennzeichnet durch**:
einen ersten Forminformationserfassungsabschnitt (200), der konfiguriert ist, um erste Forminformation bezüglich einer Form eines Projektionsabschnitts (RIRa) eines Brillenrahmens (F) zu erfassen, der einen Rand (RIR) aufweist, wobei der Projektionsabschnitt (RIRa) an dem Rand (RIR) zum Einsetzen in die Brillenlinse geformt ist; und
einen zweiten Forminformationserfassungsabschnitt (200), der konfiguriert ist, um eine zweite Forminformation bezüglich einer Form eines peripheren Rands einer Demonstrationslinse (DL) oder einer Schablone (MP) des Brillenrahmens (F) zu erfassen; und
einen Rilleninformationserfassungsabschnitt (50), der konfiguriert ist, um Rilleninformation bezüglich einer in der Brillenlinse geformten Rille zum Einsetzen der Brillenlinse in den Brillenrahmen (F) zu erfassen, basierend auf der ersten Forminformation und der zweiten Forminformation.

2. Informationserfassungsvorrichtung (1) nach Anspruch 1,
wobei der erste Forminformationserfassungsabschnitt (200) die erste Forminformation bezüglich des Projektionsabschnitts (RIRa) bei einer Mehrzahl von Vektorwinkeln (αn) des Brillenrahmens (F) erfasst,
der zweite Forminformationserfassungsabschnitt die zweite Forminformation bei einer Mehrzahl von Vektorwinkeln (αn) der Demonstrationslinse (DL) oder der Schablone (MP) des Brillenrahmens (F) erfasst, die der Mehrzahl von Vektorwinkeln (αn) des Brillenrahmens (F) entsprechen, und
der Rilleninformationserfassungsabschnitt (50) die Rilleninformation bei der Mehrzahl von Vektorwinkeln (αn) basierend auf der ersten Forminformation und der zweiten Forminformation erfasst.

3. Informationserfassungsvorrichtung (1) nach Anspruch 1 oder 2,
wobei der Rilleninformationserfassungsabschnitt (50) eine innere Form (20) des Rands (RIR), der durch den Projektionsabschnitt (RIRa) geformt ist, aus der ersten Forminformation erfasst, eine äußere Form (30) der Demonstrationslinse (DL) oder der Schablone (MP) aus der zweiten Forminformation erfasst und die Rilleninformation basierend auf der inneren Form (20) und der äußeren Form (30) erfasst.

4. Informationserfassungsvorrichtung (1) nach Anspruch 3,
wobei der Rilleninformationserfassungsabschnitt (50) eine Differenzverarbeitung zwischen der inneren Form (20) und der äußeren Form (30) ausführt, um die Rilleninformation zu erfassen.

5. Informationserfassungsvorrichtung (1) nach einem der Ansprüche 1 bis 4,
wobei der Rilleninformationserfassungsabschnitt (50) einen Anzeigeabschnitt (3) veranlasst, die Rilleninformation anzuzeigen, und die Rilleninformation basierend auf einem Betätigungssignal von einem Betätigungsabschnitt einstellt, das durch einen Bediener zum Einstellen der Rilleninformation auf den Anzeigeabschnitt eingegeben ist.

6. Informationserfassungsvorrichtung (1) nach einem der Ansprüche 1 bis 5, ferner umfassend:
einen Verarbeitungssteuerungserfassungsabschnitt (50), der konfiguriert ist, um Verarbeitungssteuerungsdaten zum Formen der Rille an die Brillenlinse basierend auf der Rilleninformation zu erfassen, wobei die Rille zum Einsetzen der Brillenlinse in den Brillenrahmen (F) geformt ist.

7. Informationserfassungsvorrichtung (1) nach einem der Ansprüche 1 bis 6,
wobei die Rilleninformation Tiefeninformation der Rille ist.

8. Informationserfassungsverfahren einer Informationserfassungsvorrichtung (1), die Information zur Verarbeitung eines peripheren Rands einer Brillenlinse erfasst,
wobei das Informationserfassungsverfahren, das durch einen Prozessor (50) der Informationserfassungsvorrichtung (1) ausgeführt wird, **gekennzeichnet ist durch**:
einen Schritt zum Erfassen von erster Forminformation bezüglich einer Form eines Projektionsabschnitts (RIRa) eines Brillenrahmens (F) mit einem Rand (RIR), wobei der Projektionsabschnitt (RIRa) an dem Rand (RIR) zum Einsetzen in die Brillenlinse geformt ist;
einen Schritt zum Erfassen zweiter Forminformation bezüglich einer Form eines peripheren Rands einer Demonstrationslinse (DL) oder einer Schablone (MP) des Brillenrahmens; und
einen Schritt zum Erfassen von Rilleninformation bezüglich einer in der Brillenlinse geformten Rille zum Einsetzen der Brillenlinse in den Brillenrahmen (F), basierend auf der ersten Forminformation und der zweiten Forminformation.

9. Informationserfassungsprogramm, das in der Informationserfassungsvorrichtung (1) nach einem der Ansprüche 1 bis 7 verwendet wird, **dadurch gekennzeichnet, dass**
das Informationserfassungsprogramm durch einen Prozessor (50) der Informationserfassungsvorrichtung (1) ausgeführt wird, um die Informationserfassungsvorrichtung (1) zu veranlassen zum Ausführen von:
einem Schritt zum Erfassen erster Forminformation bezüglich einer Form eines Projektionsabschnitts (RIRa) eines Brillenrahmens mit einem Rand (RIR), wobei der Projektionsabschnitt (RIRa) an dem Rand (RIR) zum Einsetzen in die Brillenlinse geformt ist;
einem Schritt zum Erfassen zweiter Forminformation bezüglich einer Form eines peripheren Rands einer Demonstrationslinse (DL) oder einer Schablone (MP) des Brillenrahmens; und
einem Schritt zum Erfassen von Rilleninformation bezüglich einer in der Brillenlinse geformten Rille zum Einsetzen der Brillenlinse in den Brillenrahmen (F), basierend auf der ersten Forminformation und der zweiten Forminformation.

## Revendications

1. Appareil d'acquisition d'informations (1) qui acquiert des informations pour le traitement d'un bord périphérique d'un verre de lunettes, **caractérisé par** :
une partie d'acquisition de premières informations de forme (200) configurée pour acquérir des premières informations de forme concernant une forme d'une partie saillante (RIRa) d'une monture de lunettes (F) ayant un cercle (RIR), la partie saillante (RIRa) étant formée sur le cercle (RIR) pour être ajustée dans le verre de lunettes ;
une partie d'acquisition de deuxièmes informations de forme (200) configurée pour acquérir des deuxièmes informations de forme concernant une forme d'un bord périphérique d'un verre de démonstration (DL) ou d'un gabarit (MP) de la monture de lunettes (F) ; et
une partie d'acquisition d'informations de rainure (50) configurée pour acquérir des informations de rainure concernant une rainure formée dans le verre de lunettes pour ajuster le verre de lunettes dans la monture de lunettes (F), sur la base des premières informations de forme et des deuxièmes informations de forme.

2. Appareil d'acquisition d'informations (1) selon la revendication 1,
dans lequel la partie d'acquisition de premières informations de forme (200) acquiert les premières informations de forme concernant la partie saillante (RIRa) à une pluralité d'angles vectoriels (αₙ) de la monture de lunettes (F),
la partie d'acquisition de deuxièmes informations de forme acquiert les deuxièmes informations de forme à une pluralité d'angles vectoriels (αₙ) du verre de démonstration (DL) ou du gabarit (MP) de la monture de lunettes (F) correspondant à la pluralité d'angles vectoriels (αₙ) de la monture de lunettes (F), et
la partie d'acquisition d'informations de rainure (50) acquiert les informations de rainure à la pluralité d'angles vectoriels (αₙ) sur la base des premières informations de forme et des deuxièmes informations de forme.

3. Appareil d'acquisition d'informations (1) selon la revendication 1 ou 2,
dans lequel la partie d'acquisition d'informations de rainure (50) acquiert une forme interne (20) du cercle (RIR) formé par la partie saillante (RIRa) à partir des premières informations de forme, acquiert une forme externe (30) du verre de démonstration (DL) ou du gabarit (MP) à partir des deuxièmes informations de forme, et acquiert les informations de rainure sur la base de la forme interne (20) et de la forme externe (30).

4. Appareil d'acquisition d'informations (1) selon la revendication 3,
dans lequel la partie d'acquisition d'informations de rainure (50) exécute un traitement de différence entre la forme interne (20) et la forme externe (30) pour acquérir les informations de rainure.

5. Appareil d'acquisition d'informations (1) selon l'une quelconque des revendications 1 à 4,
dans lequel la partie d'acquisition d'informations de rainure (50) amène une partie d'affichage (3) à afficher les informations de rainure, et définit les informations de rainure sur la base d'un signal de fonctionnement provenant d'une partie fonctionnelle entrée par un opérateur pour régler les informations de rainure sur la partie d'affichage.

6. Appareil d'acquisition d'informations (1) selon l'une quelconque des revendications 1 à 5, comprenant en outre :
une partie d'acquisition de données de commande de traitement (50) configurée pour acquérir des données de commande de traitement pour former la rainure sur le verre de lunettes sur la base des informations de rainure, la rainure étant formée pour ajuster le verre de lunettes dans la monture de lunettes (F).

7. Appareil d'acquisition d'informations (1) selon l'une quelconque des revendications 1 à 6,
dans lequel les informations de rainure sont des informations de profondeur de la rainure.

8. Procédé d'acquisition d'informations d'un appareil d'acquisition d'informations (1) qui acquiert des informations pour traiter un bord périphérique d'un verre de lunettes,
dans lequel le procédé d'acquisition d'informations, exécuté par un processeur (50) de l'appareil d'acquisition d'informations (1), est **caractérisé par** :
une étape d'acquisition de premières informations de forme concernant une forme d'une partie saillante (RIRa) d'une monture de lunettes (F) ayant un cercle (RIR), la partie saillante (RIRa) étant formée sur le cercle (RIR) pour être ajustée dans le verre de lunettes ;
une étape d'acquisition de deuxièmes informations de forme concernant une forme d'un bord périphérique d'un verre de démonstration (DL) ou d'un gabarit (MP) de la monture de lunettes ; et
une étape d'acquisition d'informations de rainure concernant une rainure formée dans le verre de lunettes pour ajuster le verre de lunettes dans la monture de lunettes (F), sur la base des premières informations de forme et des deuxièmes informations de forme.

9. Programme d'acquisition d'informations utilisé dans l'appareil d'acquisition d'informations (1) selon l'une quelconque des revendications 1 à 7, **caractérisé en ce que**
le programme d'acquisition d'informations est exécuté par un processeur (50) de l'appareil d'acquisition d'informations (1) pour amener l'appareil d'acquisition d'informations (1) à exécuter :
une étape d'acquisition de premières informations de forme concernant une forme d'une partie saillante (RIRa) d'une monture de lunettes ayant un cercle (RIR), la partie saillante (RIRa) étant formée sur le cercle (RIR) pour être ajustée dans le verre de lunettes ;
une étape d'acquisition de deuxièmes informations de forme concernant une forme d'un bord périphérique d'un verre de démonstration (DL) ou d'un gabarit (MP) de la monture de lunettes ; et
une étape d'acquisition d'informations de rainure concernant une rainure formée dans le verre de lunettes pour ajuster le verre de lunettes dans la monture de lunettes (F), sur la base des premières informations de forme et des deuxièmes informations de forme.
